# EUROPEAN PATENT SPECIFICATION

(11) **EP 3 958 502 B1**
(45) Date of publication and mention of the grant of the patent: **31.12.2025**
(21) Application number: 21203239.5
(22) Date of filing: 19.01.2018
(51) Int. Cl.: H04L 9/32, G06Q 30/08, H04L 9/06, H04L 9/00

(54) **COMPUTER IMPLEMENTED METHOD AND SYSTEM**
COMPUTERIMPLEMENTIERTES VERFAHREN UND SYSTEM
PROCÉDÉ ET SYSTÈME MIS EN UVRE PAR ORDINATEUR

(30) Priority: 27.01.2017 GB 201701360
(43) Date of publication of application: 23.02.2022
(62) Divisional of application: 18703629.8
(73) Proprietor: nChain Licensing AG, 6300 Zug (CH)
(72) Inventor: SEWELL, Martin, Cardiff, CF10 2HH (GB); WRIGHT, Craig Steven, Cardiff, CF10 2HH (GB)
(74) Representative: Gill Jennings & Every LLP

(56) References cited:
- US-A1- 2016 292 680
- US-A1- 2016 323 109
- US-A1- 2016 350 728

## Description

The present invention relates to a computer implemented system and method, and more particularly to a computer implemented system and method for transferring a digital asset. The invention is particularly suited, but not limited to, a blockchain-based auction system.

In this document we use the term 'blockchain' to include all forms of electronic, computer-based distributed ledgers, including, but not limited to blockchain and transaction-chain technologies, permissioned and un-permissioned ledgers, shared ledgers and variations thereof. The most widely known application of blockchain technology is the Bitcoin ledger, although other blockchain implementations have been proposed and developed. While Bitcoin may be referred to herein for the purpose of convenience and illustration, it should be noted that the invention is not limited to use with the Bitcoin blockchain and alternative blockchain implementations and protocols fall within the scope of the present invention.

A blockchain is an electronic ledger which is implemented as a computer-based decentralised, distributed system made up of blocks which in turn are made up of transactions. Each transaction includes at least one input and at least one output. Each block contains a hash of the previous block so that blocks become chained together to create a permanent, unalterable record of all transactions which have been written to the blockchain since its inception. Transactions contain small programs known as scripts embedded into their inputs and outputs, which specify how and by whom the outputs of the transactions can be accessed. On the Bitcoin platform, these scripts are written using a stack-based scripting language.

In order for a transaction to be written to the blockchain, it must be "validated". Network nodes (miners) perform work to ensure that each transaction is valid, with invalid transactions rejected from the network. Software clients installed on the nodes perform this validation work on an unspent transaction (UTXO) by executing its locking and unlocking scripts. If execution of the locking and unlocking scripts evaluate to TRUE, the transaction is valid and the transaction is written to the blockchain. Thus, in order for a transaction to be written to the blockchain, it must be i) validated by the first node that receives the transaction - if the transaction is validated, the node relays it to the other nodes in the network; and ii) added to a new block built by a miner; and iii) mined, i.e. added to the public ledger of past transactions.

Although blockchain technology is most widely known for the use of cryptocurrency implementation, digital entrepreneurs have begun exploring the use of both the cryptographic security system Bitcoin is based on and the data that can be stored on the Blockchain to implement new systems. It would be highly advantageous if the blockchain could be used for automated tasks and processes which are not limited to the realm of cryptocurrency. Such solutions would be able to harness the benefits of the blockchain (e.g. a permanent, tamper proof records of events, distributed processing, etc.) while being more versatile in their applications.

One area of current research is the use of the blockchain for the implementation of "smart contracts". These are computer programs designed to automate the execution of the terms of a machine-readable contract or agreement. Unlike a traditional contract which would be written in natural language, a smart contract is a machine executable program which comprises rules that can process inputs in order to produce results, which can then cause actions to be performed dependent upon those results.

Another area of blockchain-related interest is the use of 'tokens' (or 'coloured coins') to represent and transfer real-world entities via the blockchain. A potentially sensitive or secret item can be represented by the token which has no discernible meaning or value. The token thus serves as an identifier that allows the real-world item to be referenced from the blockchain.

A further area of interest is in the setting up of markets to enable blockchain-based trading of commodities. When commodities are to be traded, there are incentives to enable buyers and sellers to discover information and carry out a voluntary exchange more efficiently, i.e. to develop a market.

Trading in goods and services is usually carried out by means of an auction in which goods or services are offered for bid, bids are taken, and then the goods or services are sold to a selected bidder.

Attempts to automate an auction process suffer from the drawback that a trusted third party is required to receive bids, and if the security of the trusted third party is compromised, sensitive data relating to the bidders could also be compromised. In addition, an undesirable level of trust may need to be placed with the third party. US2016/292680A0 discloses an example of a digital asset intermediary settlement platform based on a blockchain.

Preferred embodiments of the present invention seek to overcome one or more of the above disadvantages of the prior art.

According to an aspect of the present invention, there is provided a method of transferring a digital asset, the method comprising:
generating a plurality of first blockchain transactions, wherein each said first blockchain transaction has an output unlockable by means of a digital signature of a respective first user and a digital signature of a second user to redeem a respective digital asset;
generating a respective second blockchain transaction, corresponding to each said first blockchain transaction, wherein each said second blockchain transaction has an input corresponding to the output of the corresponding said first blockchain transaction and has an output unlockable by means of said digital signature of the corresponding said first user to redeem the corresponding said digital asset;
generating a respective third blockchain transaction, corresponding to each said first blockchain transaction, wherein each said third blockchain transaction has an input corresponding to the output of the corresponding said first blockchain transaction and has an output unlockable by means of a digital signature of a third user to redeem the corresponding said digital asset;
selecting a said first blockchain transaction for signature; and
signing said output of said selected first blockchain transaction with said digital signatures of said first and second users, and broadcasting the corresponding said third blockchain transaction to the blockchain to enable the corresponding said digital asset to be redeemed by said third user.

Implementing the transfer of a digital asset by means of blockchain transactions provides a number of advantages. Firstly, the distributed nature of the blockchain provides the advantage of enhanced security and reliability. However, the fact that the blockchain is stored as validated blocks on a number of nodes means that the circumstances of the selection of a particular first blockchain transaction for signature can be investigated in the case of a dispute. The advantage is also provided that by signing the output of a selected first blockchain transaction, for example in the case of a successful bid in an auction, and broadcasting the corresponding said third blockchain transaction to the blockchain, the unselected first blockchain transactions, i.e. representing unsuccessful bids, become automatically invalid and are not propagated by the blockchain, therefore reducing the amount of processing required for and memory occupied by those transactions. In addition, because the second user receives unsigned blockchain transactions, the amount of trust needed to be placed in the second user is minimised, since the corresponding digital assets cannot be redeemed without the signature of the respective first user.

Each said second blockchain transaction may be ineffective before a predetermined time.

This provides the advantage of preventing bids from being refunded, in the case of an auction, until the auction process has been completed.

Selection of a said first blockchain transaction may occur while said second blockchain transactions are ineffective.

This provides the advantage of preventing refund of a successful bid, thereby improving the security of operation of the method.

The method may further comprise automatically selecting a said first blockchain transaction for signature.

This provides the advantage of enabling the process to be automated so that a first blockchain transaction is selected for signature when certain conditions are met.

The output of each first said blockchain transaction may be a pay to script hash (P2SH) transaction.

This provides the advantage of requiring less processing and occupying less memory in the blockchain.

The method may further comprise signing each said second blockchain transaction with said digital signature of said second user to enable the respective digital asset to be redeemed by the corresponding said first user.

The method may further comprise broadcasting said second blockchain transactions to the blockchain.

The digital asset may be a bid in an auction process.

The method may further comprise sending each said first blockchain transaction to said second user to enable signature of said output of said selected first blockchain transaction by said second user.

The method may further comprise sending each said second blockchain transaction to said second user to enable signature of said output of said second blockchain transaction by said second user.

The method may further comprise sending said selected first blockchain transaction to said first user to enable signature of said output of said first blockchain transaction by said first user and broadcast of said selected first blockchain transaction to the blockchain.

The second user may select a said first blockchain transaction for signature on the basis of external information.

This provides the advantage of enabling the second user to act as a trusted third party and to make the selection on the basis of verifiable information (such as market conditions or prices).

According to another aspect of the present invention, there is provided a system for carrying out the method defined above.

A preferred embodiment of the invention will now be described, by way of example only and not in any limitative sense, with reference to the accompanying drawings in which:
Figure 1 is a schematic representation of a system for implementing a blockchain-based auction embodying the present invention; and
Figure 2 illustrates blockchain transaction flow of the system of Figure 1.

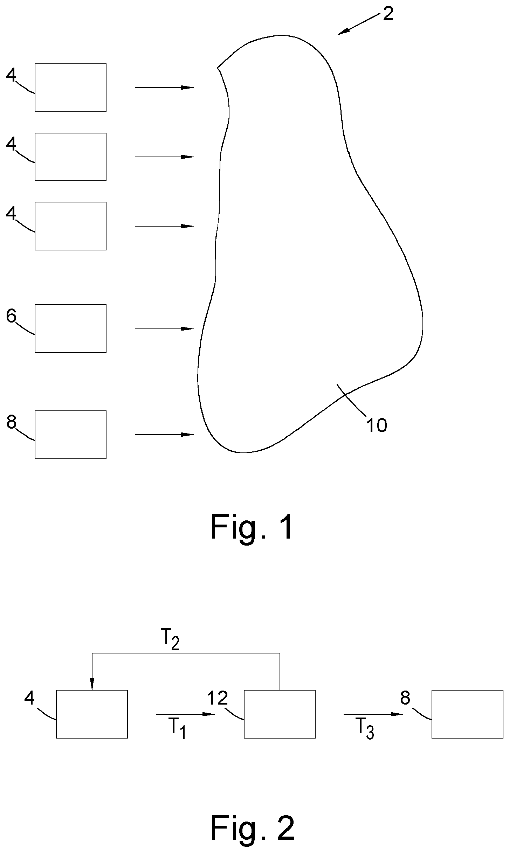

Referring to Figure 1, a blockchain-based auction system 2 has a series of first users in the form of buyers 4, a second user in the form of a trusted third party server (for example, in the form of a node on the network) known as an oracle 6, and a third user in the form of a seller 8. The users 4, 6, 8 communicate with each other over the internet 10 by means of blockchain transactions.

In order to implement the auction of the invention, the buyers 4, oracle 6 and seller 8 download and install client software. The seller 8 then creates a product listing on its computer and publishes it by sending it out to a distributed peer-to-peer network of other people who have also installed the software. An auction-style listing is created, and an expiry date and time, and a hidden reserve price if required, are added for the product listing.

At the same time, the buyers 4 use the client software to search for items and each buyer 4 can bid for an item subject to auction. In order to do this, each buyer 4 creates a first blockchain transaction T₁ having a 2-of-2 P2SH multisig output, sending the amount of bitcoin to be bid, n, plus two Bitcoin transaction fees, from the individual buyer 4 to an address that must be signed by the buyer 4 and the oracle 6. In the case of a buyer Bob and seller Alice, the first blockchain transaction T₁ is shown in table 1, and its redeem script is shown in table 2.

**Table 1: Bitcoin transaction T₁**

| Version number | | | |
|---|---|---|---|
| Number of inputs | | | 1 |
| Input (unlocking) | Previous transaction | Hash | T_{θ} |
| | | Output index | |
| | Length of signature script | | |
| | Signature script [P2PKH] | | <Bob's signature> <Bob's public key> |
| | Sequence number | | |
| Number of outputs | | | 1 |
| Output (locking) | Value | | *n* + 2 x Bitcoin transaction fee |
| | Length of public key script | | |
| | Public key script [P2SH multisig] | | OP_HASH16θ <hash16θ(redeem script)> OP_EQUAL |
| Locktime | | | 0 |

**Table 2: Redeem script for transaction T₁**

| | |
|---|---|
| Redeem script [P2SH multisig] | OP_2<Bob's public key> <oracle's public key> OP_2 |
| | OP_CHECKMULTISIG |

At the same time, each buyer 4 (Bob, in the above example) also creates a provisional return payment bitcoin transaction T₂, which spends the output from T₁ back to the respective buyer 4 Bob with an output n plus the Bitcoin transaction fee and a locktime set to the end of the auction, t. Transaction T₂ is shown in Table 3 below. Each buyer 4 signs its own input script and sends the incomplete transaction to the oracle 6, which then presents the signature to the input script, thereby making it a valid transaction, except for the locktime, and returns it to the respective buyer 4.

**Table 3: Bitcoin transaction T₂**

| Version number | | | |
|---|---|---|---|
| Number of inputs | | | 1 |
| Input (unlocking) | Previous Transaction | Hash | T₁ |
| | | Output index | θ |
| | Length of signature script | | |
| | Signature script [P2SH multisig] | | OP_θ <Bob's signature> <oracle's signature> <redeem script> |
| | Sequence number | | |
| Number of outputs | | | 1 |
| Output (locking) | Value | | *n* + Bitcoin transaction fee |
| | Length of public key script | | |
| | Public key script [P2PKH] | | OP_DUP OP_HASH16θ <hash16θ(Bob's public key)> OP_EQUALVERIFY OP_CHECKSIG |
| Locktime | | | *t* |

Finally, each buyer 4 creates a bitcoin transaction T₃, spending the output from T₁ and enabling the bitcoins to be sent to the seller 8 (Alice in the above example), as shown in Table 4, by means of an output n plus the Bitcoin transaction fee. The buyer 4 then sends the unsigned transaction T₃ to the oracle 6, who collates all of the bid transactions for a particular item, and only signs the transaction with the winning bid, which may be selected on the basis of the highest bid, or according to some other condition. In the case of equally valid bids, the reputation of the bidder, or a first bid first served system may be implemented.

The transaction T₃ corresponding to the winning bid is then returned to the respective buyer 4 to be signed and broadcast to the blockchain, as a result of which the seller 8 receives the payment and dispatches the goods being bid for to the buyer 4 with the winning bid. The other buyers broadcast their respective transactions T₂, thereby returning the bitcoins being bid to an address under the sole control of the respective buyer 4. The trust placed in the oracle 6 is kept to a minimum, since the bidders 4 send their transactions to the oracle 6 unsigned, and the bidder 4 has the final say. This flow of transactions is shown in Figure 2.

**Table 4: Bitcoin transaction T₃**

| Version number | | | |
|---|---|---|---|
| Number of inputs | | | 1 |
| Input (unlocking) | Previous Transaction | Hash | T₁ |
| | | Output index | θ |
| | Length of signature script | | |
| | Signature script [P2SH multisig: | | OP_θ <Bob's signature> <oracle's signature> <redeem script> |
| | Sequence number | | |
| Number of outputs | | | 1 |
| Output (locking) | Value | | *n* + Bitcoin transaction fee |
| | Length of public key script | | |
| | Public key script [P2PKH] | | OP_DUP OP_HASH16θ <hash16θ(Alice's public key)> OP_EQUALVERIFY OP_CHECKSIG |
| Locktime | | | 0 |

Finally, the links between the various transactions are shown in table 5, from which it can be seen that all of the transactions are standard P2PKH or P2SH multisig, and validate.

**Table 5: Transaction linkage**

| | Locking | | | Unlocking | |
|---|---|---|---|---|---|
| | Txid | Pubkey script | Redeem script | Txid | Signature script |
| P2PKH | T₀ | | | T₁ | <Bob's signature> <Bob's public key> |
| P2SH multisig | T₁ | OP_HASH16θ <hash16θ (redeem script)> OP_EQUAL | OP_2 <Bob's public key> <oracle's public key> OP_2 OP_CHECKMULTISIG | T₂ | OP_θ <Bob's signature> <oracle's signature> <redeem script> |
| P2SH multisig | T₁ | OP_HASH16θ <hash16θ (redeem script)> OP_EQUAL θ | OP_2 <Bob's public key> <oracle's public key> OP_2 OP_CHECKMULTISIG | T₃ | OP_θ <Bob's signature> <oracle's signature> <redeem script> |
| P2PKH | T₂ | OP_DUP OP_HASH16θ <hash16θ(Bob's public key)> OP_EQUALVERIFY OP_CHECKSIG | | | |
| P2PKH | T₃ | OP_DUP OP_HASH16θ <hash16θ(Alice's public key)> OP_EQUALVERIFY OP_CHECKSIG | | | |

It will be appreciated by persons skilled in the art that the above embodiment has been described by way of example only and not in any limitative sense, and that various alterations and modifications are possible without departure from the scope of the invention as defined by the appended claims.

## Claims

1. A method of transferring a digital asset, the method comprising:
receiving, from each first user of a plurality of first users, a respective first blockchain transaction, wherein each said first blockchain transaction has an output unlockable by means of a digital signature of the respective first user of the plurality of first users and a digital signature of a second user to redeem a respective digital asset;
receiving, from each first user of the plurality of first users, a respective second blockchain transaction, corresponding to said respective first blockchain transaction, wherein each said second blockchain transaction has an input corresponding to the output of the corresponding said first blockchain transaction and has an output unlockable by means of said digital signature of the respective first user of the plurality of first users to redeem the corresponding said digital asset;
receiving, from each first user of the plurality of first users, a respective third blockchain transaction, corresponding to said respective first blockchain transaction, wherein each said third blockchain transaction has an input corresponding to the output of the corresponding said first blockchain transaction and has an output unlockable by means of a digital signature of a third user to redeem the corresponding said digital asset, wherein the respective said third blockchain transaction is not signed with the digital signatures of the corresponding said first users or of the said second user;
signing, by the second user, said inputs of each said received second blockchain transaction with said digital signature of said second user;
returning, by the second user, at least each signed said second blockchain transaction, signed with at least the digital signature of the second user, to the respective corresponding said first users;
selecting, by the second user, a received said third blockchain transaction for signing by the corresponding said first user and the second user;
signing, by the second user, said input of said selected third blockchain transaction with said digital signature of said second user;
returning, by the second user, the selected third blockchain transaction, signed with the digital signature of the second user and not signed with the digital signature of the corresponding first user, to the corresponding first user; and
signing, by the corresponding first user, said input of said selected third blockchain transaction with said digital signature of the corresponding first user;
wherein broadcasting, by the corresponding first user, of the signed selected third blockchain transaction to the blockchain enables the corresponding said digital asset to be redeemed by said third user.

2. A method according to claim 1, wherein each said second blockchain transaction is ineffective before a predetermined time.

3. A method according to claim 2, wherein selection of a said third blockchain transaction occurs while said second blockchain transactions are ineffective.

4. A method according to any one of the preceding claims, further comprising automatically selecting a said third blockchain transaction for signature.

5. A method according to any one of the preceding claims, wherein the output of each first said blockchain transaction is a pay to script hash (P2SH) transaction.

6. A method according to any one of the preceding claims, further comprising broadcasting said second blockchain transactions to the blockchain.

7. A method according to any one of the preceding claims, wherein the digital asset is a bid in an auction process.

8. A method according to any one of the preceding claims, wherein the second user selects said third blockchain transaction for signature on the basis of external information.

9. A system for carrying out a method according to any one of the preceding claims.

## Patentansprüche

1. Verfahren zum Übertragen eines digitalen Assets, wobei das Verfahren Folgendes umfasst:
Empfangen einer jeweiligen ersten Blockchain-Transaktion von jedem ersten Benutzer einer Vielzahl von ersten Benutzern, wobei jede der ersten Blockchain-Transaktion eine Ausgabe aufweist, die mittels einer digitalen Signatur des jeweiligen ersten Benutzers der Vielzahl von ersten Benutzern und einer digitalen Signatur eines zweiten Benutzers zum Einlösen eines jeweiligen digitalen Assets freigeschaltet werden kann;
Empfangen einer jeweiligen zweiten Blockchain-Transaktion, die der jeweiligen ersten Blockchain-Transaktion entspricht, von jedem ersten Benutzer der Vielzahl von ersten Benutzern, wobei jede der zweiten Blockchain-Transaktion eine Eingabe aufweist, die der Ausgabe der entsprechenden ersten Blockchain-Transaktion entspricht, und eine Ausgabe aufweist, die mittels der digitalen Signatur des jeweiligen ersten Benutzers aus der Vielzahl von ersten Benutzern zum Einlösen des entsprechenden digitalen Assets freigeschaltet werden kann;
Empfangen einer jeweiligen dritten Blockchain-Transaktion, die der jeweiligen ersten Blockchain-Transaktion entspricht, von jedem ersten Benutzer der Vielzahl von ersten Benutzern, wobei jede der dritten Blockchain-Transaktion eine Eingabe aufweist, die der Ausgabe der entsprechenden ersten Blockchain-Transaktion entspricht, und eine Ausgabe aufweist, die mittels einer digitalen Signatur eines dritten Benutzers zum Einlösen des entsprechenden digitalen Assets freigeschaltet werden kann, wobei die jeweilige dritte Blockchain-Transaktion nicht mit den digitalen Signaturen der entsprechenden ersten Benutzer oder des zweiten Benutzers signiert ist;
Signieren der Eingaben jeder empfangenen zweiten Blockchain-Transaktion durch den zweiten Benutzer mit der digitalen Signatur des zweiten Benutzers;
Zurückgeben mindestens jeder signierten zweiten Blockchain-Transaktion, die mit mindestens der digitalen Signatur des zweiten Benutzers signiert ist, durch den zweiten Benutzer an die jeweiligen entsprechenden ersten Benutzer;
Auswählen einer empfangenen dritten Blockchain-Transaktion durch den zweiten Benutzer zum Signieren durch den entsprechenden ersten Benutzer und den zweiten Benutzer;
Signieren der Eingabe der ausgewählten dritten Blockchain-Transaktion durch den zweiten Benutzer mit der digitalen Signatur des zweiten Benutzers;
Zurückgeben der ausgewählten dritten Blockchain-Transaktion, die mit der digitalen Signatur des zweiten Benutzers signiert und nicht mit der digitalen Signatur des entsprechenden ersten Benutzers signiert ist, durch den zweiten Benutzer an den entsprechenden ersten Benutzer; und
Signieren der Eingabe der ausgewählten dritten Blockchain-Transaktion durch den entsprechenden ersten Benutzer mit der digitalen Signatur des entsprechenden ersten Benutzers;
wobei das Senden der signierten ausgewählten dritten Blockchain-Transaktion durch den entsprechenden ersten Benutzer an die Blockchain es ermöglicht, dass das entsprechende digitale Asset durch den dritten Benutzer eingelöst werden kann.

2. Verfahren nach Anspruch 1, wobei jede der zweiten Blockchain-Transaktion vor einer vorbestimmten Zeit unwirksam ist.

3. Verfahren nach Anspruch 2, wobei die Auswahl einer der dritten Blockchain-Transaktion erfolgt, während die zweiten Blockchain-Transaktionen unwirksam sind.

4. Verfahren nach einem der vorstehenden Ansprüche, weiter umfassend das automatische Auswählen einer der dritten Blockchain-Transaktion zur Signatur.

5. Verfahren nach einem der vorstehenden Ansprüche, wobei die Ausgabe jeder ersten der Blockchain-Transaktion eine Pay-to-Script-Hash-Transaktion (P2SH-Transaktion) ist.

6. Verfahren nach einem der vorstehenden Ansprüche, weiter umfassend das Senden der zweiten Blockchain-Transaktionen an die Blockchain.

7. Verfahren nach einem der vorstehenden Ansprüche, wobei das digitale Asset ein Gebot in einem Auktionsprozess ist.

8. Verfahren nach einem der vorstehenden Ansprüche, wobei der zweite Benutzer die dritte Blockchain-Transaktion auf der Grundlage externer Informationen zur Signatur auswählt.

9. System zur Durchführung eines Verfahrens nach einem der vorstehenden Ansprüche.

## Revendications

1. Procédé de transfert d'un actif numérique, le procédé comprenant :
la réception, en provenance de chaque premier utilisateur d'une pluralité de premiers utilisateurs, d'une première transaction de blockchain respective, dans lequel chaque dite première transaction de blockchain présente une sortie déverrouillable au moyen d'une signature numérique du premier utilisateur respectif de la pluralité de premiers utilisateurs et d'une signature numérique d'un deuxième utilisateur pour échanger un actif numérique respectif ;
la réception, en provenance de chaque premier utilisateur de la pluralité de premiers utilisateurs, d'une deuxième transaction de blockchain respective, correspondant à ladite première transaction de blockchain respective, dans lequel chaque dite deuxième transaction de blockchain présente une entrée correspondant à la sortie de ladite première transaction de blockchain correspondante et présente une sortie déverrouillable au moyen de ladite signature numérique du premier utilisateur respectif de la pluralité de premiers utilisateurs pour échanger ledit actif numérique correspondant ;
la réception, en provenance de chaque premier utilisateur de la pluralité de premiers utilisateurs, d'une troisième transaction de blockchain respective, correspondant à ladite première transaction de blockchain respective, dans lequel chaque dite troisième transaction de blockchain présente une entrée correspondant à la sortie de ladite première transaction de blockchain correspondante et présente une sortie déverrouillable au moyen d'une signature numérique d'un troisième utilisateur pour échanger ledit actif numérique correspondant, dans lequel ladite troisième transaction de blockchain respective n'est pas signée avec les signatures numériques desdits premiers utilisateurs correspondants ou dudit deuxième utilisateur ;
la signature, par le deuxième utilisateur, desdites entrées de chaque dite deuxième transaction de blockchain reçue avec ladite signature numérique dudit deuxième utilisateur ;
le renvoi, par le deuxième utilisateur, d'au moins chaque dite deuxième transaction de blockchain signée, signée avec au moins la signature numérique du deuxième utilisateur, auxdits premiers utilisateurs correspondants respectifs ;
la sélection, par le deuxième utilisateur, d'une dite troisième transaction de blockchain reçue en vue de sa signature par ledit premier utilisateur correspondant et le deuxième utilisateur ;
la signature, par le deuxième utilisateur, de ladite entrée de ladite troisième transaction de blockchain sélectionnée avec ladite signature numérique dudit deuxième utilisateur ;
le renvoi, par le deuxième utilisateur, de la troisième transaction de blockchain sélectionnée, signée avec la signature numérique du deuxième utilisateur et non signée avec la signature numérique du premier utilisateur correspondant, au premier utilisateur correspondant ; et
la signature, par le premier utilisateur correspondant, de ladite entrée de ladite troisième transaction de blockchain sélectionnée avec ladite signature numérique du premier utilisateur correspondant ;
dans lequel la diffusion, par le premier utilisateur correspondant, de la troisième transaction de blockchain sélectionnée signée à la blockchain permet audit actif numérique correspondant d'être échangé par ledit troisième utilisateur.

2. Procédé selon la revendication 1, dans lequel chaque dite deuxième transaction de blockchain est inopérante avant un temps prédéterminé.

3. Procédé selon la revendication 2, dans lequel une sélection d'une dite troisième transaction de blockchain a lieu alors que lesdites deuxièmes transactions blockchain sont inopérantes.

4. Procédé selon l'une quelconque des revendications précédentes, comprenant en outre la sélection automatique d'une dite troisième transaction de blockchain en vue de sa signature.

5. Procédé selon l'une quelconque des revendications précédentes, dans lequel la sortie de chaque première dite transaction de blockchain est une transaction de type Pay-to-Script-Hash (P2SH).

6. Procédé selon l'une quelconque des revendications précédentes, comprenant en outre la diffusion desdites deuxièmes transactions blockchain à la blockchain.

7. Procédé selon l'une quelconque des revendications précédentes, dans lequel l'actif numérique est une offre dans un processus d'enchères.

8. Procédé selon l'une quelconque des revendications précédentes, dans lequel le deuxième utilisateur sélectionne ladite troisième transaction de blockchain en vue de sa signature sur la base d'informations externes.

9. Système pour mettre en œuvre un procédé selon l'une quelconque des revendications précédentes.
